# EUROPEAN PATENT SPECIFICATION

(11) **EP 0 995 649 B1**
(45) Date of publication and mention of the grant of the patent: **13.08.2003**
(21) Application number: 99120698.8
(22) Date of filing: 19.10.1999
(51) Int. Cl.: B60R 25/02

(54) **Steering unit for vehicles**
Lenkeinheit für Fahrzeuge
Ensemble de direction pour véhicules

(30) Priority: 20.10.1998 IT TO980890
(43) Date of publication of application: 26.04.2000
(73) Proprietor: FIAT AUTO S.p.A., 10135 Torino (IT)
(72) Inventor: Demaria, Bruno, 10095 Grugliasco (IT)
(74) Representative: Eccetto, Mauro

(56) References cited:
- DE-C- 19 641 899

## Description

The present invention relates to a steering unit for vehicles, and in particular to a servo-assisted steering unit of the type which comprises a hydraulic steering actuator connected to the wheels of the vehicle, and a supply unit controlled by means of the steering wheel of the vehicle, in order to convey an operative fluid to the hydraulic actuator. There is then normally associated with the steering unit a steering-lock device with an anti-theft function, in order to lock the steering wheel in an angularly fixed position.

The known steering-lock devices are generally of the mechanical type, and normally comprise a slide unit, which is connected mechanically to a key cylinder for starting the vehicle, and is movable by means of the thrust of the key cylinder itself, between an advanced, operative position, in which it engages positively a corresponding seat provided on the steering shaft or column, locking angularly the shaft itself, and thus the steering wheel, and a withdrawn, rest position, in which it permits free rotation of the steering wheel.

Although they are universally used, the known steering-lock devices are relatively costly, since they normally comprise a large number of parts, require relatively lengthy fitting times, and in some cases, are unreliable, since they provide low resistance to attempted breaking into, and theft of the vehicle.

DE 19641899C forming the preamble of claim 1 discloses a steering unit for vehicles comprising a hydraulic actuator, interception means and pressure-limiting means which are arranged outside the interception means.

The object of the present invention is thus to provide a steering unit, which makes it possible to solve simply and economically the above-described problems.

According to the present invention, is provided a steering unit for vehicles as claimed in claim 1.

The invention is now described with reference to the attached drawings, which illustrate a non-limiting embodiment of the invention, in which:
figure 1 illustrates, partially in cross-section, and with parts removed for the sake of clarity, a preferred embodiment of the steering unit according to the present invention; and
figure 2 illustrates, in cross-section and on an enlarged scale, a detail of the device in figure 1.

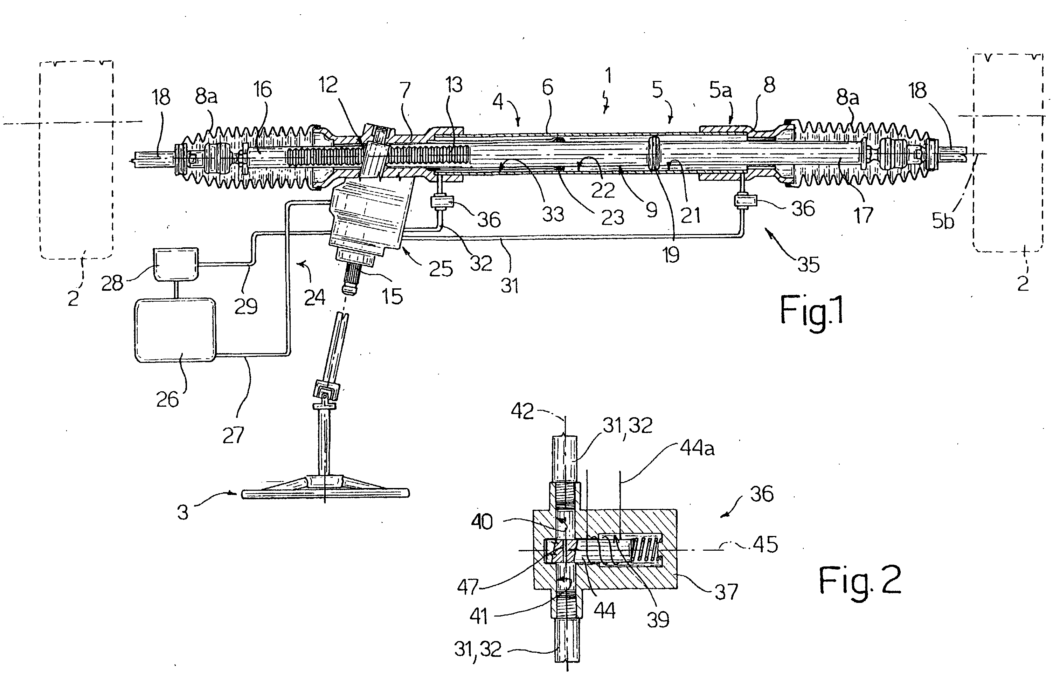

In figure 1, 1 indicates as a whole a vehicle which is partially illustrated, and comprises a pair of drive wheels 2, a steering wheel 3, and a servo-assisted steering unit 4, which is interposed between the wheels 2 and the steering wheel 3.

The unit 4 comprises a double-effect hydraulic cylinder 5, which in turn comprises an envelope 5a, which has its own axis 5b, and can be connected integrally with a support body (not shown). The envelope 5a comprises an intermediate tubular body 6, and two end lateral attachment bodies 7 and 8, each of which is integrally connected to the body 6 in a fluid-tight manner, and supports corresponding bellows 8a, which are connected in a projecting manner.

The envelope 5a accommodates in an axially sliding manner a rod 9, which constitutes part of the hydraulic cylinder 5, extends co-axially relative to the axis 5b, and is movable axially in opposite directions, under the thrust of a known sprocket unit 12. In the particular example described, the unit 12 comprises a rack 13, which is provided directly on the rod 9, and a sprocket which engages with the rack 13, and is keyed onto a steering shaft 15, which is controlled by means of the steering wheel 3.

The rod 9 comprises two opposite end portions, indicated as 16 and 17, which are connected to the respective bodies 7, 8 in an axially sliding manner, and of which the portion 17 is connected to the body 8 in a fluid-tight manner. The portions 16 and 17 project outside the corresponding bodies 7, 8, and inside the corresponding bellows 8a, and are connected, in a manner which is known and is not described in detail, to respective units 18, for transmission of the steering motion to the wheels 2. An intermediate portion of the rod 9 supports integrally a piston 19, which slides in a fluid-tight manner inside the body 6, and, together with the body 6 itself and the body 8, delimits a first chamber 21 with a variable volume of the hydraulic cylinder 5, a second chamber 22 of which, with a variable volume, is delimited not only by the piston 19 and the body 6, but also by a known annular sealing element 23, which is disposed in a fixed position inside the body 6, and surrounds the rod 9 in a fluid-tight manner.

Again with reference to figure 1, the steering unit 4 additionally comprises a hydraulic circuit 24 for the supply of an operative fluid, normally oil, to the hydraulic cylinder 5. The circuit 24 comprises a known rotary distributor 25 with continual positioning, which is connected to the shaft 15, and has an intake aperture of its own, which is connected to an inlet of a known rotary pump 26, which constitutes part of the circuit 24, by means of a delivery pipe 27, and an outlet aperture of its own, which is connected to a tank 28 for accumulation and supply of the fluid to the pump 26, by means of a return duct 29. The distributor 25 additionally comprises two apertures for intake/outlet of the oil, of which one is connected to the chamber 21 by means of a first pipe 31, whereas the other is connected to-the chamber 22 by means of a second pipe 32, and by means of an axial duct 33 which extends between the intermediate body 6 and the rod 9.

Again with reference to figure 1, the unit 4 finally comprises a steering-lock device 35, which in turn comprises, for each of the pipes 31 and 32, a respective bistable solenoid valve 36, which is disposed along the corresponding pipes 31, 32 themselves, in order to intercept the flow of oil inside the corresponding pipes 31, 32.

As illustrated in figure 2 in particular, each solenoid valve 36 comprises a corresponding envelope 37, which can be connected integrally to the support body (not shown), and delimits a chamber 39, which communicates with the exterior via two ducts 40 and 41, which extend coaxially relative to an axis 42 of the corresponding pipes 31, 32, and are each connected to a respective branch of the pipes 31, 32 themselves.

Again with reference to figure 2, inside each chamber 39, there is accommodated a corresponding interception element 44, which constitutes the movable element of the solenoid valve 36, and can be displaced, by means of a corresponding actuation circuit 44a, along a direction 45 which is at right-angles to the axis 42, between an advanced interception position, in which it extends between the ducts 40 and 41, and substantially inhibits the flow of oil through the pipes 31, 32, and a withdrawn rest position, in which it puts into communication with one another the two ducts 40 and 41, thus permitting free circulation of oil inside the corresponding pipes 31, 32. In order to avoid accidental displacements of the interception elements 44 into their advanced interception positions when a flow of oil is travelling through the pipes 31, 32, the dimensions of each actuation circuit 44a are such as to exert a thrust force on the corresponding element 44, towards its advanced operative position, which force is lesser than the dynamic action exerted by the oil which is flowing inside the corresponding pipes 31, 32, on the relevant interception element 44, when the interception element 44 itself is disposed in its withdrawn position.

Again with reference to figure 2, in order to limit the increase of pressure of the oil in the pipes 31 and 32 as the result of an attempt to turn the steering wheel 3 with the engine switched off and the pump at rest, when the elements 44 are disposed in their advanced, interception positions, each element 44 is provided with its own through-hole 47, which has its own axis parallel to the axis 42 and inside the ducts 40 and 42, in order, in 'use, to permit blow-by of'a minimum flow rate of oil, such as to avoid the occurrence of excess pressures, and simultaneously, to make it impossible in practice to steer the wheels 2.

In particular, each hole 47 has a diameter which is much smaller than that of the ducts 40 and 41 and of the pipes 31 and 32, and is preferably variable between 0.3 and 1 mm.

In use, with the engine running, when the elements 44 of the solenoid valves 36 are disposed in their withdrawn positions, the unit 4 acts like a normal servo-assisted steering unit, whereas when the elements 44 are disposed in their advanced positions, they create a barrier against movement of the oil inside the pipes 31, 32, such that in practice, the chambers 21 and 22 are isolated from the exterior, and consequently the wheels 2 and the steering wheel 3 are locked in fixed angular positions.

In these conditions, the unit 4 is then protected against high forces applied to the shaft 15 via the steering wheel 3, for example during an attempted theft; in fact, the excess pressure of the oil, which would be generated as a result of the application of these torsion forces, is prevented by the blow-by of the oil through the holes 47, which blow-by, as previously stated, firstly permits slow turning of the steering wheel 3, but secondly prevents normal steering of the wheels 2.

It is thus apparent from the foregoing information that the steering unit 4 described meets the dual requirement of servo-assisting hydraulically the steering of the wheels 2, and simultaneously creating an efficient and reliable anti-theft system, by means of axial locking of the cylinder 5, and consequently angular locking of the wheels 2 and of the steering wheel 3.

Finally, it is apparent from the foregoing information, that modifications and variants which do not depart from the field of protection of the present invention as defined by the claims, can be made to the unit 4 described. In particular, the solenoid valves can be made in a manner which is different from that described by way of example, and/or replaced by interception devices which are different, and disposed in positions which are different from those of the solenoid valves 36, but which are, however, all designed to lock the rod 9 hydraulically in a fixed axial position relative to the corresponding envelope 5a.

## Claims

1. Steering unit (4) for vehicles, comprising a hydraulic actuator (5) which can be connected to the drive wheels (2) of a vehicle (1) in order to steer the wheels (2) themselves; a hydraulic circuit means (24) associated with a steering wheel (3) of the vehicle (1) in order to supply an operative fluid to the said hydraulic actuator (5); solenoid valves (36) which are associated with the said circuit means (24) and comprise a respective interception unit (44) which can be switched between an operative fluid interception position in which said interception unit (44) substantially prevents the flow of fluid from and to said hydraulic actuator (5) and a rest position in which the interception unit (44) itself permits free fluid circulation from and to said hydraulic actuator (5); and pressure-limiting means (47) to limit the pressure of said operative fluid when said interception units (44) are in their operative fluid interception position; said steering unit being **characterized in that** the said pressure-limiting means (47) are supported by the said solenoid valves (36).

2. Steering unit according to claim 1, **characterized in that** for each solenoid valve (36), the said pressure-limiting means comprise a through-hole (47) which is provided through the corresponding said interception unit (44).

3. Steering unit according to claim 2, **characterized in that** the said hole (47) has a diameter which is variable between 0.3 and 1 mm.

4. Vehicle (1) comprising a pair of drive wheels (2) and a steering wheel (3), **characterized in that** it further comprises a steering unit (4) according to any one of the preceding claims which is interposed between the steering wheel (3) and the wheels (2).

## Patentansprüche

1. Lenkeinheit (4) für Fahrzeuge, die umfaßt: einen Hydraulikaktuator (5), der mit den Antriebsrädern (2) eines Fahrzeugs (1) verbunden werden kann, um die Räder (2) selbst einzuschlagen; ein Hydraulikkreismittel (24), das einem Lenkrad (3) des Fahrzeugs (1) zugeordnet ist, um dem Hydraulikaktuator (5) Arbeitsfluid zuzuführen; Magnetventile (36), die dem Hydraulikkreismittel (24) zugeordnet sind und eine jeweilige Unterbrechungseinheit (44) umfassen, die zwischen einer Arbeitsfluid-Unterbrechungsstellung, in der die Unterbrechungseinheit (44) im wesentlichen die Strömung von Fluid von und zu dem Hydraulikaktuator (5) verhindert, und einer Ruhestellung, in der die Unterbrechungseinheit (44) selbst eine freie Fluidzirkulation von und zu dem Hydraulikaktuator (5) zuläßt, geschaltet werden kann; und Druckbegrenzungsmittel (47), die den Druck des Arbeitsfluids begrenzen, wenn die Unterbrechungseinheiten (44) in ihrer Arbeitsfluid-Unterbrechungsstellung sind; wobei die Lenkeinheit **dadurch gekennzeichnet ist, daß** die Druckbegrenzungsmittel (47) durch die Magnetventile (36) unterstützt sind.

2. Lenkeinheit nach Anspruch 1, **dadurch gekennzeichnet, daß** die Druckbegrenzungsmittel für jedes Magnetventil (36) eine Durchgangsbohrung (47) aufweisen, die durch die entsprechende Unterbrechungseinheit (44) vorgesehen ist.

3. Lenkeinheit nach Anspruch 2, **dadurch gekennzeichnet, daß** die Bohrung (47) einen Durchmesser besitzt, der im Bereich von 0,3 bis 1 mm variabel ist.

4. Fahrzeug (1), das ein Paar Antriebsräder (2) und ein Lenkrad 83) enthält, **dadurch gekennzeichnet, daß** sie ferner eine Lenkeinheit (4) nach einem der vorhergehenden Ansprüche umfaßt, die zwischen das Lenkrad (3) und die Räder (2) eingefügt ist.

## Revendications

1. Ensemble de direction (4) pour véhicules, comprenant un actionneur hydraulique (5) qui peut être relié aux roues motrices (2) d'un véhicule (1) afin d'orienter les roues (2) elles-mêmes ; des moyens de circuit hydraulique (24) associés à un volant de direction (3) du véhicule (1) afin de fournir un fluide de fonctionnement audit actionneur hydraulique (5) ; des soupapes à solénoïde (36) qui sont associées auxdits moyens de circuit (24) et comprennent un ensemble d'interception respectif (44) qui peut être déplacé entre une position d'interception de fluide de fonctionnement, dans laquelle ledit ensemble d'interception (44) empêche sensiblement l'écoulement de fluide à partir dudit et jusqu'audit actionneur hydraulique (5), et une position de repos, dans laquelle l'ensemble d'interception (44) lui-même permet la libre circulation de fluide à partir dudit et jusqu'audit actionneur hydraulique (5) ; et des moyens limiteurs de pression (47) pour limiter la pression dudit fluide de fonctionnement lorsque lesdits ensembles d'interception (44) sont dans leur position d'interception de fluide de fonctionnement ; ledit ensemble de direction étant **caractérisé en ce que** lesdits moyens limiteurs de pression (47) sont supportés par lesdites soupapes à solénoïde (36).

2. Ensemble de direction selon la revendication 1, **caractérisé en ce que** pour chaque soupape à solénoïde (36), lesdits moyens limiteurs de pression comprennent un trou débouchant (47) qui est fourni à travers ledit ensemble d'interception correspondant (44).

3. Ensemble de direction selon la revendication 2, **caractérisé en ce que** ledit trou (47) a un diamètre qui varie de 0,3 à 1 mm.

4. Véhicule (1) comprenant une paire de roues motrices (2) et un volant de direction (3), **caractérisé en ce qu'**il comprend en outre un ensemble de direction (4) selon l'une des revendications précédentes qui est interposé entre le volant de direction (3) et les roues (2).
